Europäisches Patentamt

European Patent Office

Office européen des brevets

(11) Publication number: **0 371 436**
**A1**

## (12) EUROPEAN PATENT APPLICATION

(21) Application number: **89121894.3**

(22) Date of filing: **27.11.89**

(51) Int. Cl.⁵: **B65G 53/24, C06B 21/00, F42B 33/02, F42D 1/10**

(30) Priority: **01.12.88 IT 2280788**

(43) Date of publication of application:
**06.06.90 Bulletin 90/23**

(84) Designated Contracting States:
**AT BE CH DE ES FR GB GR IT LI LU NL SE**

(71) Applicant: **SME S.R.L.**
**Borgo Bainsizza Via Piano Rosso**
**I-04010 Cisterna di Latina (Latina)(IT)**

(72) Inventor: **Belloni, Armando**
**Viale Piave 11**
**I-20075 Lodi(IT)**
Inventor: **Olivero, Claudio**
**Via Carpinetane est 3o Traversa 10**
**Segni (Roma)(IT)**

(74) Representative: **Marietti, Giuseppe**
**CENTRO DI CONSULENZA IN PROPRIETA'**
**INDUSTRIALE Viale Caldara, 38**
**I-20122 Milano(IT)**

(54) **Device for transferring dangerous slow-flowing particulate material.**

(57) A device for transferring dangerous slow-flowing particulate substances comprises a supporting framework (1) on which a container (4) with the material to be transferred is positioned and fastened, as well as a sucking tube (3) which can be controllably lowered into the container (4) and means to convey the material towards the sucking tube (3) during the latter's downward movement.

Fig.1

EP 0 371 436 A1

# DEVICE FOR TRANSFERRING DANGEROUS SLOW-FLOWING PARTICULATE MATERIAL

The present invention relates to a device for transferring slow-flowing solid particulate substances, that is solid substances in powder, granules, scales or the like wherein single particules tend to remain coherent to one another and have a high angle of rest.

In particular, the invention relates to a device for transferring by aspiration particulate dangerous substances, such as toxic or corrosive substances or, as in the example referred to in the present specification, susceptible to cause explosions.

During the preparation of explosive powders, and more generally during the treatment of dangerous particulate material, there necessarily arises the problem of transferring the material from a first container (as for instance a mixing drum) to a second position where the product undergoes further processing (for instance its packaging).

Said transfer is generally performed either manually, by means of shovels, scoops or the like, or by upturning the container to be emptied, or by aspiration using a sucking tube connected to a cyclone.

It is obvious that the first and mainly the second method involve the serious drawback of causing excessive dusting of the material, which may cause the formation of those dispersions in the air which can make even "innocuous" materials such as sawings, flour or similar to become explosive.

The method of transfer by aspiration avoids said dusting of the material, but, due to the material low flowing, requires the presence of an operator manually moving the sucking tube along the whole surface of the material itself. Said physical presence of the operator in the vicinity of the material, which is needed in the first method as well, involves however, besides higher cost of manpower, problems for the operator's safety as well, mainly in the case in which the material consists of powders or explosive products.

Therefore there is the need of a device for transferring dangerous slow-flowing particulate materials, and in particular explosive powders, which does not cause dispersions of material in the air and does not require the presence of an operator in the vicinity of the material.

An object of the present invention is to overcome the aforementioned problems by providing a device for the automatic transfer by aspiration of dangerous and slow-flowing particulate materials.

More particularly, the invention relates to a device for transferring by aspiration a dangerous slow-flowing particulate material, in particular explosive powders, characterized in that it comprises:
a framework supporting material sucking means;

means for positioning and fastening to said framework a container of the material to be transferred; means to controllably modify the reciprocal position between said container and said sucking means; and means to convey the product present in the container towards said sucking means.

By means of said device the particulate material can be transferred almost completely, and without the constant presence of an operator, from a drum or other container to a subsequent station for the material treatment.

The invention will be now described more in detail with reference to the accompanying drawings given with illustrative and not limiting purposes, wherein:

- figure 1 is a partial cross-sectional view of a possible embodiment of the invention;

- figure 2 is a side view of the embodiment of figure 1; and

- figure 3 is a bottom view of the particulate material sucking means and conveying means.

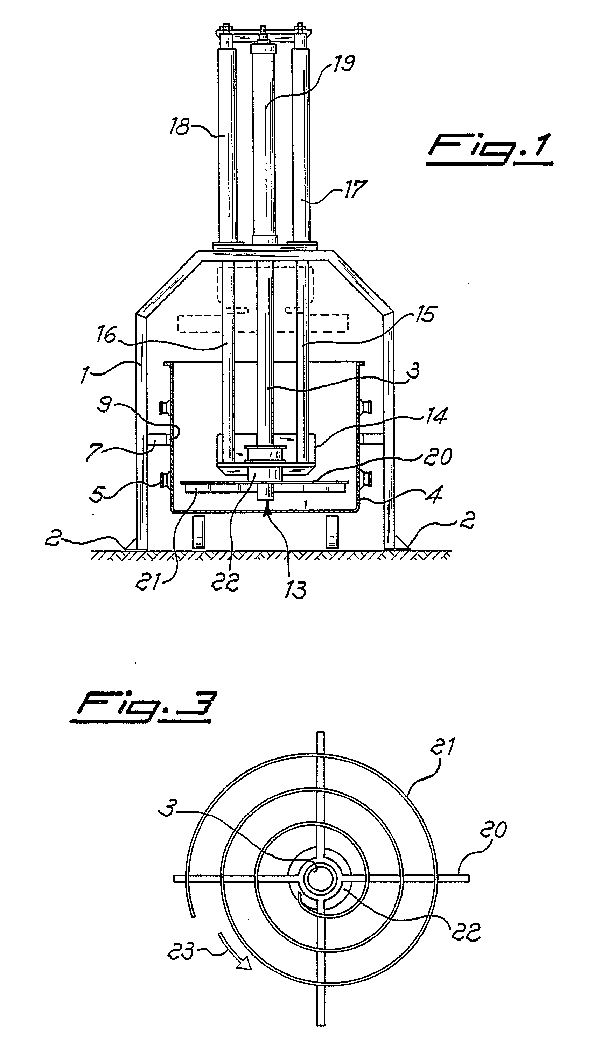

With reference to figure 1, the device comprises a framework 1, fastened to the ground by means of plates 2 and having the function of supporting the material sucking means and of positioning and clamping a container 4 which houses the material to be transferred.

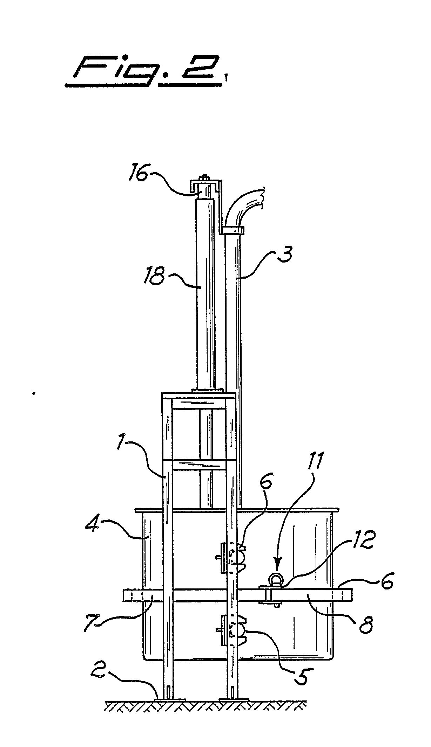

As it can be better seen in figure 2, the positioning of the vat or circular container 4 is assured by a couple of clamps 6 provided on each side of framework 1 and engaged with as many rollers 5 integral to the container 4. The vat 4 thus positioned stands for approximately half of its circumference on a semicircular bar 7 which is part of the framework 1 and is provided with an internal sealing element 9. On the opposite side, with respect to framework 1, there is provided an arm 8, shaped in a way as to fit to the container 4. An end of the arm 8 is fixed, for example by means of a hinge, in a first position 10 (which preferably corresponds to an end of the bar 7) to the framework 1; the opposite end of the arm 8 can be fixed in 11 on the other end of the bar 7.

The container 4 is then fastened in a univocal way, without clearance on the framework 1; this fastening is particularly important in case explosive products are treated, in that it allows to avoid the contact between the container walls and the sucking means present therein. In a preferred embodiment of the invention, there is provided a safety device 12 placed in correspondence with the fixable end of arm 8, to prevent operation of the device when the container 4 is not clamped on the framework 1.

In order to allow sucking of all the material present in the thus fastened container 4, the position between the sucking means, which in the embodiment of figures 1-3 essentially consist of a sucking tube 3, and the container 4 must be susceptible to controllable adjustements during the material transfer, in a way that the sucking tube be always in contact with the material to be sucked.

In the preferred embodiment shown, the container 4 remains fixed, while the lower end, or sucking end, 13 of the tube 3 is translated in a controllable way towards the bottom of the container 4, and vice versa. Said translation must be accurately controlled to prevent the tube 3 or its support from fouling or sliding against the container walls, thus minimizing the risk of provoking an explosion. For this purpose, the invention envisages that the lower end 13 of the tube 3 is mounted on a frame 14, which is on turn mounted on two sleeves 15 and 16 axially movable with respect to the surface of the material (and of the ground) according to a predetermined run, and partially housed within two guides 17 and 18. The axially-oriented movement is provided by a double-acting hydraulic or pneumatic cylinder 19, the piston of which is integral to the sleeves 15 and 16 and with the sucking tube 3. As the tube 3 rises and lowers with the piston of cylinder 19, at least part of it must be flexible.

In an alternative embodiment (not shown) the tube 3 remains fixed and the container 4 is lifted towards the tube 3 and then lowered when aspiration is over. In any case, whatever the way of modifying the position between the sucking means and the container, they must never come in contact with each other : for this purpose the limit stop lowest point of the tube 3, as shown in figure 1, is placed at a certain distance from the bottom of the container 4.

Due to the fact that, as already mentioned, the particulate material has a low or very low flowability, only a minimal portion of it moves to replace the portion sucked by the tube 3, which therefore creates a kind of "pit" inside the container 4.

In order to avoid what described above, the device according to the invention is provided with means to convey, from the surrounding areas, the non sucked material towards the tube 3. Said means essentially consist of a support 20 mounted in a rotationally movable way near the end 13 of tube 3, and coaxially with said tube, and of an essentially helicoidal protruding section 21 mounted on the lower section of support 20 and movable with it. Obviously, the maximum diameter of the unit formed by the support 20 and the protruding section 21 must be smaller than the internal diameter of the container 4 to an extent as to avoid occasional fouls between the container and said conveying means.

In figure 3, the protruding section 21 mounted on the support 20 consists of a coplanar spiral, but the latter can be replaced by any equivalent helicoidal structure, such as for example by a plurality of fins or the like with a radially inclined position to form a spiral. Support and spiral structure are rotated in the direction indicated by the arrow 23 by means of a motor 22, preferbaly mounted on said frame 14 and formed by a double-acting piston with compressed air actuation.

In case the container 4 has a not circular section, instead of the helicoidal structure it is possible to use linearly movable blades to and from the sucking tube 3; said blades can be lifted during the removal from the tube 3.

In any case, however, the speed at which the tube 3 is lowered (or, conversely, the container 4 is raised) is controlled by sensors according to the speed at which the transferred material is treated downstream the present device. On its turn, the rotation speed of the spiral or helicoidal structure is controlled too, generally as a function of the speed of the downward movement of the tube 3. Still for an optimal operation of the device, the reciprocal positioning between the lower end 13 of the tube 3 and the lower edge of the spiral 21 is adjustable according to the type of material treated to assure continuous and constant feeding of material to the sucking tube 3.

## Claims

1. A device for the transfer by aspiration of dangerous slow-flowing particulate material, in particular explosive powders, characterized in that it comprises:
a support framework for material sucking means; means for positioning and fastening onto said framework a container of the material to be transferred; means for controllably modify the reciprocal position between said container and said sucking means; and means for conveying the product present in said container towards said sucking means.

2. A device according to claim 1, characterized in that said means to position and fasten said container comprise a couple of clamps and a locking arm hinged at a first end in a first position on the supporting framework and susceptible to be fastened at the opposite end in a second position on said framework.

3. A device according to claim 2, characterized in that, in correspondence with said second position of the framework there is provided a safety member to prevent operation of the device when the container is not fastened by means of said locking arm.

4. A device according to one of claims 1 to 3, characterized in that said means to modify the reciprocal position between the container and sucking means consist of means for the controlled translation of the sucking means to and from the bottom of the container by means of a pneumatically or hydraulically operated cylinder, the piston of which is movable perpendicularly to the surface of the material to be transferred and integral to said sucking means; said sucking means comprising at least in part a flexible sucking tube.

5. A device according to one of claims 1 to 3, characterized in that said sucking means are fixed and said means to modify the reciprocal position between the container and the sucking means consist of means for the controlled translation of said container to and from said sucking means.

6. A device according to one of claims 1 to 5, characterized in that said means to convey the material towards the sucking means comprise a support mounted in a rotationally movable way in correspondence to the sucking end of said sucking means, movable with said sucking end and provided with an essentially helicoidal protruding end movable with the support itself and capable of conveying, during the support rotation, said material to be transferred towards said sucking end; the maximum diameter of the support and/or said protruding section rotation being smaller than the internal diameter of said container to form a safety gap of a preset value.

7. A device according to claim 6, characterized in that said protruding section is formed by a coplanar spiral.

8. A device according to claim 6, characterized in that said protruding section is formed by a plurality of blades, fins or the like.

9. A device according to one of claims 6 to 8, characterized in that said means to rotate said support comprise a motor provided with double-acting piston operated by compressed air.

10. A device according to one of the preceding claims, characterized in that said means to convey the material towards the sucking means comprise a plurality of blades or the like, linearly movable to and from said sucking means, said blades being liftable during the stage of removal from said sucking means.

11. A device according to one of claims 6 to 10, characterized in that it comprises means to adjust the reciprocal position between the lower end of said sucking means and the lower end of said conveying means.

12. A device according to one of the preceding claims, characterized in that it comprises means for controlling the operation speed of said conveying means and/or the speed of reciprocal displacement between the sucking means and the material container according to the speed of the downstream treatment of the transferred material.

Fig.1

Fig.3

_Fig.2_

## DOCUMENTS CONSIDERED TO BE RELEVANT

EP 89121894.3

| Category | Citation of document with indication, where appropriate, of relevant passages | Relevant to claim | CLASSIFICATION OF THE APPLICATION (Int Cl⁵) |
|---|---|---|---|
| A | <u>DE - A1 - 2 346 281</u> <br> (CLAUDIUS PETERS AG) <br>   * Page 3, paragraph 3; <br>    fig. 1 * <br> -- | 1 | B 65 G 53/24 <br> C 06 B 21/00 <br> F 42 B 33/02 <br> F 42 D 1/10 |
| A | <u>US - A - 3 951 462</u> <br> (DE FRANCISCI) <br>   * Abstract; fig. 1 * <br> -- | 1 | |
| A | <u>DE - B - 2 332 072</u> <br> (C. SEEGER MASCHINENFABRIK) <br>   * Fig. 1,2 * <br> -- | 1 | |
| A | <u>GB - A - 941 982</u> <br> (IMPERIAL CHEMICAL INDUSTRIES <br> LIMITED) <br>   * Fig. 1 * <br> ---- | 1 | |

TECHNICAL FIELDS
SEARCHED (Int Cl⁵)

B 65 G
C 06 B 21/00
F 42 B
F 42 D

The present search report has been drawn up for all claims

| Place of search | Date of completion of the search | Examiner |
|---|---|---|
| VIENNA | 09-03-1990 | PISSENBERGER |